(19) Europäisches Patentamt
European Patent Office
Office européen des brevets

(11) **EP 1 547 672 A1**

(12) **EUROPÄISCHE PATENTANMELDUNG**

(43) Veröffentlichungstag:
**29.06.2005 Patentblatt 2005/26**

(51) Int Cl.7: **B01D 63/02**, B01D 65/00

(21) Anmeldenummer: **04106766.1**

(22) Anmeldetag: **21.12.2004**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **23.12.2003 DE 10361473**

(71) Anmelder: **MANN+HUMMEL GmbH**
**71638 Ludwigsburg (DE)**

(72) Erfinder:
• **Tudyka, Stefan**
**71642, Ludwigsburg (DE)**
• **Gerlach, Karin**
**71696, Möglingen (DE)**

(54) **Keramisches Hohlfaser-Membranmodul**

(57) Ein keramisches Hohlfaser-Membranmodul (1) umfasst mindestens eine keramische Hohlfaser (7), die in einem umschließenden Gehäuse (2) aufgenommen ist und deren Endabschnitte (7a,7b) am Gehäuse (2) gehalten sind. Die Wandung (10) des Gehäuses (2) ist flexibel ausgebildet.

Fig. 2

EP 1 547 672 A1

**Beschreibung**

Die Erfindung bezieht sich auf ein keramisches Hohlfaser-Membranmodul nach dem Oberbegriff des Anspruches 1.

Aus der Druckschrift WO 03/051495 A1 ist ein Hohlfaser-Membranmodul bekannt, dessen Hohlfasern aus einem Keramikmaterial bestehen. Das Modul umfasst ein zylindrisches Gehäuse, in dessen Innenraum eine Mehrzahl axial verlaufender Hohlfasern gespannt sind. Die Hohlfasern sind im Bereich ihrer beiden Stirnseiten von einer scheibenförmigen Vergussmasse eingefasst, welche den Gehäuseinnenraum von der Außenseite separiert. Das Hohlfaser-Membranmodul kann zu Filtrationszwecken eingesetzt werden. Ein Fluid, welches ein oder zwei verschiedene, zu separierende Substanzen enthält, wird in den Gehäuseinnenraum eingeführt, wobei diejenige Substanz im Fluid mit kleinerem Teilchendurchmesser durch die poröse Hohlfaserwandung radial von außen nach innen in den Hohlfaser-Innenraum eindringt und in den Hohlfasern stirnseitig abgeleitet wird. Das aufkonzentrierte Fluid mit der Substanz mit größerem Teilchendurchmesser, die nicht die Hohlfaserwandung durchdringen kann, wird wieder aus dem Gehäuseinnenraum abgeleitet. Zur Verbesserung des Abscheidegrades kann das Fluid in einem Kreisprozess kontinuierlich bzw. wiederholt durch das Hohlfaser-Membranmodul geleitet werden. Die Abscheidewirkung wird hierbei maßgeblich von der Porengröße in der Wandung der Hohlfasern bestimmt.

Das die Hohlfasern einschließende Gehäuse besteht aus einem Material mit gleichem Wärmedehnungskoeffizienten wie die Hohlfasern, um Wärmespannungen und -dehnungen bei einem Betrieb mit erhöhter Temperatur zu verhindern, welche zu einem Bruch der Hohlfasern führen könnten. Als Material für die Gehäusewandung kann ebenso wie für die Hohlfasern Keramik eingesetzt werden. Das Hohlfaser-Membranmodul kann in eine Prozessanlage integriert werden, wobei zur Verbindung mit den Anschlüssen der Prozessanlage in der Regel eine Anpassung der Schnittstellen auf Seiten des Hohlfaser-Membranmoduls und/oder der Prozessanlage erforderlich ist.

Der Erfindung liegt das Problem zugrunde, ein keramisches Hohlfaser-Membranmodul vielseitig einsetzbar auszubilden.

Dieses Problem wird erfindungsgemäß mit den Merkmalen des Anspruches 1 gelöst. Die Unteransprüche geben zweckmäßige Weiterbildungen an.

Das erfindungsgemäße, keramische Hohlfaser-Membranmodul umfasst mindestens eine keramische Hohlfaser, die in einem Gehäuse aufgenommen ist. Erfindungsgemäß ist die Wandung des Gehäuses flexibel ausgebildet, wodurch die Möglichkeit eröffnet wird, das Modul in verschiedene Richtungen zu biegen und hierdurch an einen vorgegebenen Bauraum anzupassen. Die Flexibilität des Gehäuses ermöglicht den Einbau des Membranmoduls in unterschiedliche Einbausituationen, ohne die Schnittstellen bzw. die Anschlüsse verändern zu müssen bzw. mit nur geringen Änderungen der Anschlüsse.

Die Flexibilität und Verformbarkeit des Membranmoduls wird insbesondere durch Verwendung eines flexiblen Metalls, eines flexiblen Kunststoffs oder eines Gummimaterials für die Gehäusewandung des die Hohlfaser aufnehmenden Gehäuses erzielt. Im Falle des Einsatzes eines flexiblen Metalls kann beispielsweise ein aus Edelstahl gefertigtes Flexrohr verwendet werden, gegebenenfalls kommt aber auch eine Wandung aus einem Metallgeflecht oder einem Metallgewirke in Betracht, das gegebenenfalls auf der Innenseite und/auf der Außenseite mit einer dichtenden Folie oder dergleichen überzogen oder aber in eine Kunststoffoder Gummiwandung eingebettet sein kann.

Um einen Bruch der Hohlfaser bei einer Biegung des Gehäuses zu verhindern, wird zweckmäßig beim Biegen des Gehäuses vom geradlinigen in einen gekrümmten Zustand die Länge des Moduls beibehalten. Die Sicherheit gegen Faserbruch kann auch dadurch deutlich verbessert werden, dass die Hohlfaser im unverformten Gehäuse zwischen ihren gegenüberliegenden Enden nicht geradlinig verläuft, sondern einen beliebigen, gebogenen oder gekrümmten Verlauf einnimmt. Gemäß einer besonders vorteilhaften Ausführung bildet die Hohlfaser eine spiralförmige Wendel bzw. Helix, deren Wicklungen zweckmäßig über die Gehäuselänge gleichartig aufgebaut sind. Ein nicht-linearer Verlauf der Hohlfaser innerhalb des Gehäuses ermöglicht geringfügige Längenänderungen, welche unter Umständen bei einer Verformung des Moduls auftreten können.

Die Hohlfaser ist insbesondere im Bereich ihrer beiden Endabschnitte gehalten und fest mit dem Gehäuse verbunden. Zweckmäßig sind eine Mehrzahl von Hohlfasern im Gehäuseinnenraum geführt, wodurch die Leistungsfähigkeit des Membranmoduls bei der Filtration von Fluiden signifikant erhöht wird. Beispielsweise sind bis zu 15 oder 20 Hohlfasern etwa parallel zueinander und wendelförmig im Gehäuseinnenraum geführt. Die Stirnseiten der Hohlfasern können hierbei beliebig, zum Beispiel in Kreisform, an beiden Enden des Gehäuses angeordnet sein.

Die Hohlfasern liegen bevorzugt mit Abstand zu den Seitenwänden des Gehäuses, um Beschädigungen zu vermeiden, welche bei einem Kontakt der Hohlfasern mit den Innenwänden auftreten könnten.

Die Keramik-Hohlfasern bestehen aus anorganischem Material wie zum Beispiel Aluminiumoxid ($Al_2O_3$), Zirkonoxid, Siliziumkarbid oder Siliziumoxid. Beim Einsatz wendelförmiger Hohlfasern können diese zwar unterschiedliche, temperaturbedingte Dehnungen von Hohlfaser und Gehäusewandung kompensieren, jedoch bietet es Vorteile, für das Gehäuse ein Material mit wenigstens annähernd gleichen Wärmedehnungskoeffizienten zu verwenden, vorteilhaft ebenfalls ein Keramikmaterial.

Das Gehäuse besteht insbesondere aus einem flexiblen Gehäusekörper, der beispielsweise zylindrisch ausgebildet ist, sowie starren Endstücken, in denen die Enden der Hohlfasern aufgenommen sind. Diese Endstücke übernehmen die Funktion von Einfassungen, über die die Hohlfasern in einem festen Gefüge relativ zueinander gehalten sowie mit dem Gehäuse verbunden sind. Gemäß einer vorteilhaften Ausführung übernehmen die Einfassungen auch die Funktion von Dichtungselementen, welche den Gehäuseinnenraum gegenüber der Umgebung strömungsdicht abschließen. Als Material für die Einfassung bzw. Dichtungselement kommt gießfähiges Material in Frage, beispielsweise organische Kleber wie E-poxid- oder Polyurethanharze, gegebenenfalls auch anorganische Materialien wie zum Beispiel Gläser oder Keramiken.

Möglich ist auch der Einsatz eines zwar festen, jedoch für das Fluid durchlässigen Materials für die Einfassung, welches durch Auftragen bzw. Aufbringen eines Dichtungsmaterials strömungsdicht versiegelt wird.

Weitere Vorteile und zweckmäßige Ausführungen sind den weiteren Ansprüchen, der Figurenbeschreibung und den Zeichnungen zu entnehmen. Es zeigen:

Fig. 1    eine perspektivische Ansicht eines keramischen Hohlfaser-Membranmoduls mit einem flexiblen, zylindrischen Gehäuse im unverformten Grundzustand und einem im Gehäuseinnenraum aufgenommenen Bündel wendelförmig gewickelter Hohlfasern,

Fig. 2    das Hohlfaser-Membranmodul im verformten Zustand,

Fig. 3    eine Draufsicht auf eine wendelförmige Hohlfaser,

Fig. 4    eine Ansicht auf die Stirnseite des Membranmoduls mit einer Mehrzahl von Hohlfaserenden, welche in einem Kreis angeordnet sind.

In den Figuren sind gleiche Bauteile mit gleichen Bezugszeichen versehen.

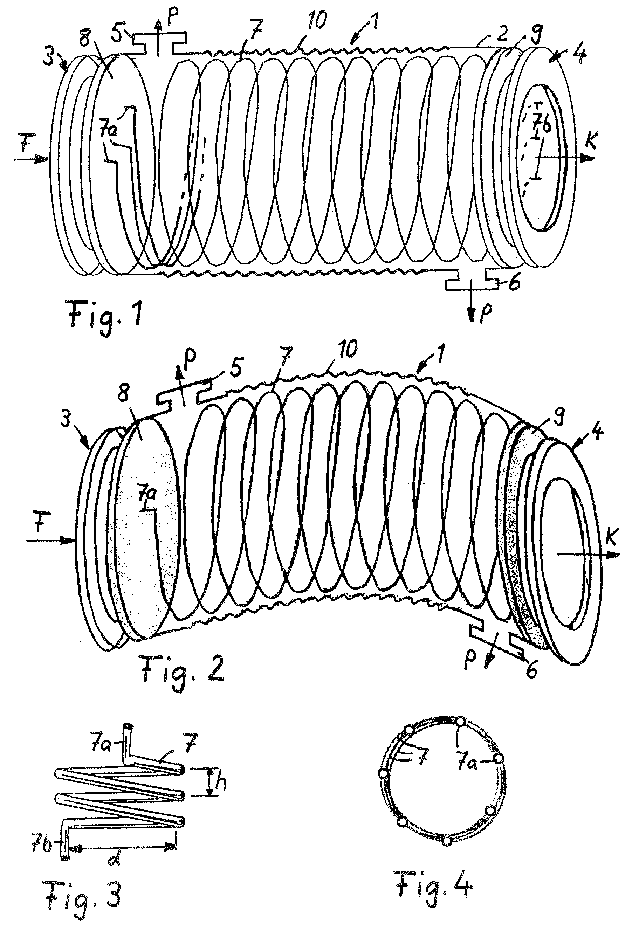

Das in Fig. 1 dargestellte Hohlfaser-Membranmodul 1 wird insbesondere zur Filtration von Fluiden - sowohl flüssige als auch gasförmige Medien - eingesetzt. Das Hohlfaser-Membranmodul 1 umfasst ein im unverformten Grundzustand zylindrisches, rohrartiges Gehäuse 2, welches an seinen Stirnseiten Anschlüsse 3 und 4 aufweist, zwischen denen im Gehäuseinnenraum eine Mehrzahl von Hohlfasern 7 geführt sind. Die Hohlfasern 7 bestehen aus Keramikmaterial und besitzen eine poröse Wandung, welche beispielsweise eine Porengröße von 5 µm aufweist. Die Hohlfasern 7 sind spiralförmig ausgebildet und bilden Wendeln, welche sich im Gehäuseinnenraum zwischen den Anschlüssen 3 und 4 erstrecken und eine gemeinsame Längsachse mit dem Gehäuse 2 aufweisen. Der Wendelaußendurchmesser ist etwas geringer als der Gehäuseinnendurchmesser, so dass die Wendeln auf Abstand zur Gehäuseinnenwand liegen und ein Kontakt mit der Gehäuseinnenwand und eine hierdurch hervorgerufene Beschädigung der Hohlfasern auch bei einem Verformen des Gehäuses 2 vermieden wird.

Die Endabschnitte 7a sowie 7b der Hohlfasern 7 sind fest in scheibenförmigen Einfassungen 8 und 9 aufgenommen bzw. gehalten, welche Bestandteil der Anschlüsse 3 und 4 an den Stirnseiten des Gehäuses 2 sind. Die Einfassungen 8 und 9 übernehmen zweckmäßig zusätzlich auch die Funktion von Dichtungselementen und dichten den Gehäuseinnenraum gegenüber der Umgebung strömungsdicht ab. Die Hohlfasern 7 werden zweckmäßig in die Einfassungen 8 und 9 eingegossen, beispielsweise durch Schleuderpotten oder Eingießen der Einfassungen in das Gehäuse 2. Als Material für die Einfassungen kommt beispielsweise PUR in Betracht, gegebenenfalls auch keramische Materialien. Zur Verbesserung bzw. Erzielung der Dichtwirkung kann eine Stirnseite der Einfassungen, insbesondere die Innenseite, mit einem Dichtungsmaterial beschichtet sein. Die Endabschnitte 7a und 7b der Hohlfasern 7 durchragen die Einfassungen 8 und 9, so dass die offenen Stirnseiten der Hohlfasern mit der Umgebung kommunizieren.

In das Gehäuse 2 sind radiale Anschlüsse 5 und 6 eingebracht, die zweckmäßig axial beabstandet und vorzugsweise auf gegenüberliegenden Umfangsseiten angeordnet sind. Bei alternativen Ausführungen können die Anschlüsse jedoch auch auf derselben Umfangsseite oder in beliebigen Winkeln zueinander angeordnet sein.

Das zu reinigende Fluid F, welches Verunreinigungen enthält, wird wie dargestellt in Pfeilrichtung auf eine der Stirnseiten des Gehäuses 2 geführt und über die Endabschnitte 7a in die Hohlfasern geleitet. Bei dem Fluid F handelt es sich um die zu filtrierende Rohlösung bzw. das Feed. Aufgrund der Porosität der Wandungen der Hohlfasern 7 kann das Filtrat bzw. Permeat P aus dem Fluid radial von innen nach außen durch die Poren der Hohlfaserwandungen hindurchtreten und sich im Gehäuseinnenraum des Gehäuses 2 sammeln, von dem aus das Permeat P über die Anschlüsse 5 bzw. 6 ausgeleitet wird. Der nicht über die Poren der Hohlfasern austretende Anteil des Fluids F strömt über den an der gegenüberliegenden Stirnseite liegenden Anschluss 4 als Retentat bzw. Konzentrat K über die Endabschnitte 7b der Hohlfasern 7 aus dem Membranmodul aus. Das Konzentrat K enthält die Verunreinigungen in einer konzentrierten Form. Zur Verbesserung des Filtrationsgrades kann das Konzentrat in einem geschlossenem Kreislauf wieder einer erneuten Filtrierung dem Membranmodul 1 zugeführt werden, wobei dieser Kreisprozess so lange durchgeführt werden kann, bis die gewünschte Filtrationsstufe erreicht worden ist.

Die Innenseite und/oder die Außenseite der Hohlfasern können eine Beschichtung aufweisen, beispielsweise eine organische, eine anorganische oder eine metallische Beschichtung, um die Abscheide- bzw. Filtrationseigenschaften zu beeinflussen. Die Beschichtung kann einen zusätzlichen chemischen und/oder mechanischen Effekt besitzen, beispielsweise eine katalytische Reaktion hervorrufen, oder aber die Porengröße verändern.

Die zylindrische Gehäusewandung 10 des Gehäuses 2 ist flexibel bzw. verformbar ausgebildet. Wie Fig. 1 in Verbindung mit Fig. 2 zu entnehmen, kann das gesamte Hohlfaser-Membranmodul 1 flexibel verformt werden, wodurch eine Anpassung des Membranmoduls an konstruktive Gegebenheiten möglich ist. Der Abstand zwischen den Einfassungen 8 und 9 verändert sich - gemessen über die Rohrmittelachse des Gehäuses 2 - hierbei nicht bzw. nur unwesentlich. Geringfügige Längenänderungen können über die Wendelung der Hohlfasern 7 problemlos kompensiert werden.

Im Gehäuseinnenraum sind vorteilhaft etwa 15 bis 20, gegebenenfalls aber auch weniger Hohlfasern geführt. Über die Anzahl an Hohlfasern und die Wendelsteigung kann zusätzlich zur Materialwahl und der Porengröße in den Hohlfaserwandungen sowie dem Durchmesser der Wendel und der Gesamtlänge des Membranmoduls die Filtrationsleistung beeinflusst werden. Hierbei hat es sich als zweckmäßig erwiesen, dass die in Fig. 3 dargestellte Steigung h einer Wendel der Hohlfaser 7 mindestens das 0.5fache des Hohlfaser-Außendurchmessers beträgt. Ein bevorzugter Bereich liegt beim 10fachen bis 20fachen des Hohlfaserdurchmessers für die Wendelsteigung h. Der Wendelinnendurchmesser d liegt vorteilhaft bei zumindest 20 mm. Der Außendurchmesser der Hohlfaser kann maximal 1 mm betragen und liegt vorzugsweise in einem Bereich zwischen 0.4 mm und 0.6 mm. Die Wandstärke beträgt maximal 0.2 mm, vorzugsweise 0.05 mm bis 0.1 mm. Die Porosität des Hohlfaser-Keramikmaterials liegt bevorzugt bei 20 % bis 60 %. In einem typischen Anwendungsfall beträgt der Hohlfaser-Außendurchmesser 0.5 mm, der Windungsdurchmesser 100 mm und die Windungssteigung 10 mm. Die Anzahl n der Hohlfasern, die in einem Membranmodul zusammengefasst werden können, hängt vom Außendurchmesser $D_H$ der verwendeten Hohlfasern und der Steigung h der Wendel ab und folgt insbesondere der Beziehung

$$n = h/D_H \,.$$

Im vorgenannten Ausführungsbeispiel können demnach maximal 20 spiralförmige Hohlfasern verwendet werden.

Wie Fig. 4 zu entnehmen, sind die Endabschnitte 7a (ebenso wie die gegenüberliegenden Endabschnitte 7b) der Hohlfasern 7 zweckmäßig gleichförmig in einem Kreis angeordnet. Eine gleichmäßige Verteilung der Endabschnitte ist jedoch nicht zwingend erforderlich; gegebenenfalls kommt auch eine ungleichmäßige bzw. regellose Verteilung entlang eines Umfangskreises oder auch innerhalb der gesamten Stirnfläche der Endabschnitte in Betracht.

**Patentansprüche**

1. Keramisches Hohlfaser-Membranmodul, mit mindestens einer keramischen Hohlfaser (7), die in einem die Hohlfaser (7) umschließenden Gehäuse (2) aufgenommen ist und deren Endabschnitte (7a, 7b) am Gehäuse (2) gehalten sind, **dadurch gekennzeichnet,**
   **dass** die Wandung des Gehäuses (10) flexibel ausgebildet ist.

2. Hohlfaser-Membranmodul nach Anspruch 1, **dadurch gekennzeichnet,**
   **dass** die Gehäusewandung (10) aus einem flexiblen Metall besteht.

3. Hohlfaser-Membranmodul nach Anspruch 2, **dadurch gekennzeichnet,**
   **dass** die Gehäusewandung (10) aus einem flexiblen Metallgewebe besteht.

4. Hohlfaser-Membranmodul nach einem der Ansprüche 1 bis 3, **dadurch gekennzeichnet,**
   **dass** die Gehäusewandung (10) aus einem flexiblen Kunststoff besteht.

5. Hohlfaser-Membranmodul nach einem der Ansprüche 1 bis 4, **dadurch gekennzeichnet,**
   **dass** die Gehäusewandung (10) aus einem Gummimaterial besteht.

6. Hohlfaser-Membranmodul nach einem der Ansprüche 1 bis 5, **dadurch gekennzeichnet,**
   **dass** die Hohlfaser (7) spiralförmig als Wendel im Gehäuseinnenraum geführt ist.

7. Hohlfaser-Membranmodul nach Anspruch 6, **dadurch gekennzeichnet,**
   **dass** die Steigung der Wendel mindestens das 0,5fache des Außendurchmessers der Hohlfaser (7) beträgt.

8. Hohlfaser-Membranmodul nach Anspruch 7, **dadurch gekennzeichnet,**
   **dass** die Steigung (h) der Wendel das 10fache bis 20fache des Durchmessers der Hohlfaser (7) beträgt.

9. Hohlfaser-Membranmodul nach einem der Ansprüche 6 bis 8, **dadurch gekennzeichnet,**
   **dass** der Innendurchmesser (d) der Wendel mindestens 20 mm beträgt.

**10.** Hohlfaser-Membranmodul nach einem der Ansprüche 1 bis 9, **dadurch gekennzeichnet, dass** eine Mehrzahl von Hohlfasern (7) im Gehäuseinnenraum gebündelt sind.

**11.** Hohlfaser-Membranmodul nach Anspruch 6 und 10, **dadurch gekennzeichnet, dass** maximal 20 spiralförmige Hohlfasern (7) im Gehäuseinnenraum geführt sind.

**12.** Hohlfaser-Membranmodul nach Anspruch 6 und 10 oder 11, **dadurch gekennzeichnet, dass** die Stirnseiten der Hohlfasern (7) in einem Kreis angeordnet sind.

**13.** Hohlfaser-Membranmodul nach einem der Ansprüche 1 bis 12, **dadurch gekennzeichnet, dass** die Enden der Hohlfaser (7) in einer Einfassung (8, 9) aufgenommen sind, über das die Hohlfaser (7) mit dem Gehäuse (2) verbunden ist.

**14.** Hohlfaser-Membranmodul nach einem der Ansprüche 1 bis 13, **dadurch gekennzeichnet, dass** der Gehäuseinnenraum über ein Dichtungselement gegenüber den offenen Stirnseiten der Hohlfaser (7) strömungsdicht abgeschlossen ist.

**15.** Hohlfaser-Membranmodul nach Anspruch 13 und 14, **dadurch gekennzeichnet, dass** die Einfassung (8, 9) das Dichtungselement bildet.

Fig. 1

Fig. 2

Fig. 3

Fig. 4

EP 1 547 672 A1

**EUROPÄISCHER RECHERCHENBERICHT**

Europäisches Patentamt

Nummer der Anmeldung

EP 04 10 6766

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,Y | WO 03/051495 A (FILTERWERK MANN+HUMMEL GMBH; GERLACH, KARIN; HARTMANN, UWE; HEILMANN,) 26. Juni 2003 (2003-06-26) * Zusammenfassung; Abbildungen 8,9 * * Seite 17, Zeile 3 - Seite 20, Zeile 31 * ----- | 1,2,4, 10,13-15 | B01D63/02 B01D65/00 |
| Y | WO 93/12866 A (THE DOW CHEMICAL COMPANY) 8. Juli 1993 (1993-07-08) * Zusammenfassung; Abbildungen * * Seite 1, Zeile 5 - Zeile 8 * * Seite 2, Zeile 27 - Seite 3, Zeile 1 * * Seite 7, Zeile 23 - Zeile 30 * * Seite 8, Zeile 1 - Zeile 21 * * Seite 13, Zeile 3 - Zeile 19 * * Seite 17, Zeile 18 - Zeile 31 * * Seite 25, Zeile 36 - Zeile 38 * ----- | 1,2,4, 10,13-15 | |
| A | EP 0 627 254 A (E.I. DU PONT DE NEMOURS AND COMPANY; L'AIR LIQUIDE, SOCIETE ANONYME PO) 7. Dezember 1994 (1994-12-07) * das ganze Dokument * ----- | 1-4 | |
| A | US 4 734 106 A (GOLLAN ET AL) 29. März 1988 (1988-03-29) * das ganze Dokument * * insbesondere, Spalte 2, Zeile 12 - Zeile 14 * ----- | 1 | RECHERCHIERTE SACHGEBIETE (Int.Cl.7) B01D |
| A | GB 1 510 486 A (RHONE POULENC IND) 10. Mai 1978 (1978-05-10) * das ganze Dokument * ----- | 1-5 | |
| A | US 4 348 458 A (OTSTOT ET AL) 7. September 1982 (1982-09-07) * das ganze Dokument * ----- | 1,6-9, 11,12 | |

Der vorliegende Recherchenbericht wurde für alle Patentansprüche erstellt

| Recherchenort | Abschlußdatum der Recherche | Prüfer |
|---|---|---|
| Den Haag | 7. April 2005 | Hoornaert, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.............................................................
& : Mitglied der gleichen Patentfamilie, übereinstimmendes Dokument

EPO FORM 1503 03.82 (P04C03)

7

**ANHANG ZUM EUROPÄISCHEN RECHERCHENBERICHT**
**ÜBER DIE EUROPÄISCHE PATENTANMELDUNG NR.**                    EP 04 10 6766

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-04-2005

| Im Recherchenbericht angeführtes Patentdokument | | Datum der Veröffentlichung | Mitglied(er) der Patentfamilie | | Datum der Veröffentlichung |
|---|---|---|---|---|---|
| WO 03051495 | A | 26-06-2003 | WO | 03051495 A1 | 26-06-2003 |
| | | | EP | 1458463 A1 | 22-09-2004 |
| WO 9312866 | A | 08-07-1993 | US | 5312898 A | 17-05-1994 |
| | | | US | 5202023 A | 13-04-1993 |
| | | | CA | 2084848 A1 | 21-06-1993 |
| | | | DE | 69231648 D1 | 22-02-2001 |
| | | | EP | 0549258 A1 | 30-06-1993 |
| | | | EP | 0618839 A1 | 12-10-1994 |
| | | | JP | 5255428 A | 05-10-1993 |
| | | | JP | 7503889 T | 27-04-1995 |
| | | | WO | 9312866 A1 | 08-07-1993 |
| EP 0627254 | A | 07-12-1994 | US | 5380433 A | 10-01-1995 |
| | | | EP | 0627254 A1 | 07-12-1994 |
| | | | JP | 7047237 A | 21-02-1995 |
| US 4734106 | A | 29-03-1988 | AT | 65713 T | 15-08-1991 |
| | | | AU | 595197 B2 | 29-03-1990 |
| | | | AU | 5700286 A | 13-11-1986 |
| | | | CA | 1288060 C | 27-08-1991 |
| | | | DE | 3680587 D1 | 05-09-1991 |
| | | | EP | 0204424 A1 | 10-12-1986 |
| | | | JP | 7100126 B | 01-11-1995 |
| | | | JP | 61293524 A | 24-12-1986 |
| | | | US | RE33502 E | 25-12-1990 |
| GB 1510486 | A | 10-05-1978 | FR | 2276855 A1 | 30-01-1976 |
| | | | DE | 2530046 A1 | 22-01-1976 |
| | | | JP | 51048782 A | 27-04-1976 |
| US 4348458 | A | 07-09-1982 | EP | 0047640 A2 | 17-03-1982 |
| | | | JP | 57077321 A | 14-05-1982 |

EPO FORM P0461

Für nähere Einzelheiten zu diesem Anhang : siehe Amtsblatt des Europäischen Patentamts, Nr.12/82